# EUROPEAN PATENT APPLICATION

(11) **EP 2 796 712 A1**
(43) Date of publication of application: **29.10.2014**
(21) Application number: 13165657.1
(22) Date of filing: 26.04.2013
(51) Int. Cl.: F03D 11/00, F03D 1/06

(54) **Wind turbine generator and method for cooling rotor hub of wind turbine generator**

(71) Applicant: Mitsubishi Heavy Industries, Ltd., Tokyo 108-8215 (JP)
(72) Inventor: Seki, Seita, Tokyo, 108-8215 (JP)
(74) Representative: Intès, Didier Gérard André

(57) **Abstract**

A wind turbine generator includes a rotor hub (4) to which wind turbine blades (5) are attached, and a nacelle (3) that accommodates a generating mechanism for generating electric power based on a rotational driving force of the wind turbine blades (5) and is coupled to the rotor hub (4), the wind turbine generator further including: a pump (22) that pumps a refrigerant; a first heat exchanger (24) that is provided within the rotor hub (4) to exchange heat between the refrigerant and air inside the rotor hub (4); a second heat exchanger (28) that exchanges heat between the refrigerant heat-exchanged in the first heat exchanger (24) and air or water outside the rotor hub (4); and a refrigerant circuit (20) that connects the pump (22), the first heat exchanger (24), and the second heat exchanger (28), with the refrigerant circulated therethrough.

## Description

### {Technical Field}

The present invention relates to a wind turbine generator and a method for cooling a rotor hub of the wind turbine generator.

### {Background Art}

Equipment such as a pitch drive system and a pitch control system for wind turbine blades, and a battery is installed within a rotor hub of a wind turbine generator. Since the equipment generates heat, a temperature inside the rotor hub is increased. When the temperature inside the rotor hub is increased, the equipment installed within the rotor hub may malfunction, or may be shut down. Thus, there is a demand for temperature control of an installation environment for the equipment in the rotor hub.
Each of the PTLs 1 to 4 discloses a technique for controlling the temperature inside the rotor hub. For example, it is described in PTL 1 that the temperature control is required since the pitch control system needs to quickly and precisely change a blade pitch.

### {Citation List}

### {Patent Literature}

{PTL 1} Japanese Patent No. 4796039
{PTL 2} US Patent Application Publication No. 2009/0060748
{PTL 3} US Patent No. 7594800
{PTL 4} US Patent No. 7621720

### {Summary of Invention}

### {Technical Problem}

There is a method for cooling air inside the rotor hub by providing a ventilation fan in an opening portion formed in the rotor hub, and thereby replacing the air inside the rotor hub with outside air. However, especially in a case of an off-shore wind turbine generator system, there is a higher risk of damage by briny air. It is thus necessary to provide a salt removal filter in the opening portion of the rotor hub, or upgrade coating for an inner wall of the rotor hub and the equipment within the rotor hub.

There is also a method in which the rotor hub is hermetically sealed and not actively cooled down. However, the temperature inside the rotor hub becomes higher than that of a case in which the rotor hub is ventilated, and therefore the lifespan of the battery installed within the rotor hub may be decreased, or the temperature may exceed a standard operating temperature range of the equipment.

The present invention has been made in view of such circumstances, and it is an object thereof to provide a wind turbine generator and a method for cooling a rotor hub of the wind turbine generator which can reduce measures for preventing damage inside the rotor hub caused by briny air, and also can suppress an increase in temperature inside the rotor hub.

### {Solution to Problem}

To achieve the aforementioned object, a wind turbine generator and a method for cooling a rotor hub of the wind turbine generator according to the present invention employ the following solutions.
That is, a wind turbine generator according to a first aspect of the present invention is a wind turbine generator including a rotor hub to which a wind turbine blade is attached, and a nacelle to which the rotor hub is rotatably connected, and which accommodates a generating mechanism for generating electric power based on a rotational driving force with the wind turbine blade, the wind turbine generator further comprising: a pump for pumping a refrigerant; a first heat exchanger provided inside the rotor hub, for performing a heat exchange between the refrigerant and air inside the rotor hub; a second heat exchanger for performing a heat exchange between the refrigerant after the heat exchange at the first heat exchanger and air or water outside the rotor hub; and a refrigerant circuit connecting the pump, the first heat exchanger, and the second heat exchanger, for circulating the refrigerant through the connected elements.

In accordance with the first aspect of the present invention, the refrigerant is circulated through the refrigerant circuit that connects the pump, the first heat exchanger, and the second heat exchanger. The refrigerant pumped by the pump exchanges heat with the air inside the rotor hub at the first heat exchanger. The refrigerant after the heat exchange at the first heat exchanger performs another heat exchange with the air or water outside the rotor hub at the second heat exchanger to discharge the heat obtained by the heat exchange at the first heat exchanger to the outside of the rotor hub. The refrigerant after the heat exchange at the second heat exchanger is thereby cooled down. That is, the heat inside the rotor hub can be discharged to the outside by the refrigerant circulated through the refrigerant circuit, and an increase in temperature inside the rotor hub can be thereby suppressed.
The second heat exchanger is installed, for example, outside the nacelle or the tower to exchange heat between the refrigerant and the air or seawater outside the rotor hub.

In a second aspect of the present invention according to the above invention, the refrigerant circuit is arranged so as to pass through a coupling portion between the rotor hub and the nacelle, and a pipe of the refrigerant circuit passing through the coupling portion and fixed to the rotor hub is connected to a pipe of the refrigerant circuit fixed to the nacelle via a rotary joint.

In accordance with the second aspect, the pipe of the refrigerant circuit can be installed between the rotor hub as a rotor, and the nacelle that remains stationary with respect to the rotor hub rotating about its axis. The refrigerant can be thereby transferred to the rotor hub from the nacelle, or to the nacelle from the rotor hub.

In a third aspect of the present invention according to the above invention, the refrigerant circuit is further connected at a downstream side thereof relative to the first heat exchanger to a third heat exchanger provided in a transmission or a generator installed inside the nacelle, and the second heat exchanger performs the heat exchange to discharge heat of the refrigerant after the heat exchange at the first heat exchanger and heat exchange at the third heat exchanger to the outside of the rotor hub.

In accordance with the third aspect, the refrigerant circulated through the refrigerant circuit flows through the third heat exchanger after being discharged from the first heat exchanger, and thereby exchanges heat with the transmission or the generator installed in the nacelle. Accordingly, the refrigerant discharges the heat of the transmission or the generator which is obtained by the heat exchange in the third heat exchanger together with the heat inside the rotor hub which is obtained by the heat exchange in the first heat exchanger to outside of the rotor hub.

A fourth aspect of the present invention according to the above invention may further include: a first temperature measuring unit that measures a temperature inside the rotor hub; a second temperature measuring unit that measures a temperature outside the nacelle; and a control unit that controls a start-stop operation of the pump based on the temperatures measured by the first temperature measuring unit and the second temperature measuring unit.

In accordance with the fourth aspect, the pump starts to circulate the refrigerant, or stops to circulate the refrigerant based on the temperature inside the rotor hub and the temperature outside the nacelle.

A method for cooling a rotor hub of a wind turbine generator according to a fifth aspect of the present invention is a method for cooling a rotor hub of a wind turbine generator, wherein the wind turbine generator comprises the rotor hub to which a wind turbine blade is attached, a nacelle to which the rotor hub is rotatably connected and which accommodates a generating mechanism for generating electric power based on a rotational driving force with the wind turbine blade, a refrigerant circuit connecting a pump, a first heat exchanger, and a second heat exchanger, for circulating a refrigerant through the connected elements, a first temperature measuring unit that measures a temperature inside the rotor hub, and a second temperature measuring unit that measures a temperature outside the nacelle, the method comprising the steps of: starting an operation of pumping the refrigerant based on the temperatures measured by the first temperature measuring unit and the second temperature measuring unit; performing a heat exchange between the refrigerant and air inside the rotor hub by the first heat exchanger provided in the rotor hub; performing a heat exchange between the refrigerant after the heat exchange at the first heat exchanger and air or water outside the rotor hub by the second heat exchanger; and stopping the operation of pumping the refrigerant based on the temperatures measured by the first temperature measuring unit and the second temperature measuring unit.

### {Advantageous Effects of Invention}

In accordance with the present invention, the refrigerant circulated through the refrigerant circuit discharges the heat obtained by the heat exchange at the first heat exchanger installed in the rotor hub to the outside of the rotor hub by the second heat exchanger. It is thus not necessary to provide an opening portion in the rotor hub. Accordingly, measures against damage by briny air required in the rotor hub can be reduced, and an increase in the temperature inside the rotor hub can be also suppressed.

### {Brief Description of Drawings}

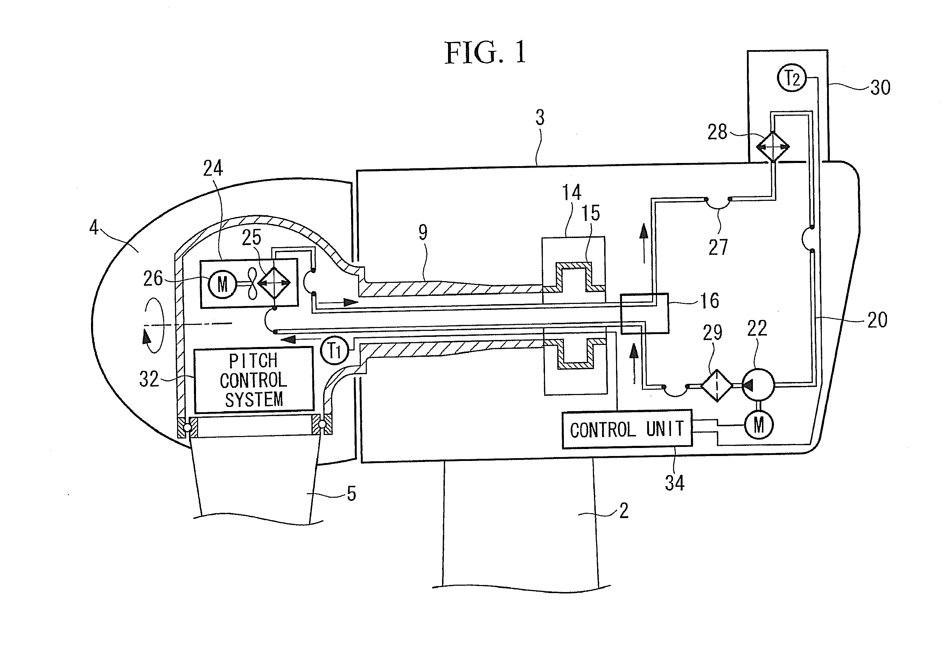

{Fig. 1}
   Fig. 1 is a schematic configuration view illustrating a rotor hub cooling system of a wind turbine generator according to an embodiment of the present invention.
{Fig. 2}
   Fig. 2 is a side view illustrating the wind turbine generator according to the embodiment.

### {Description of Embodiments}

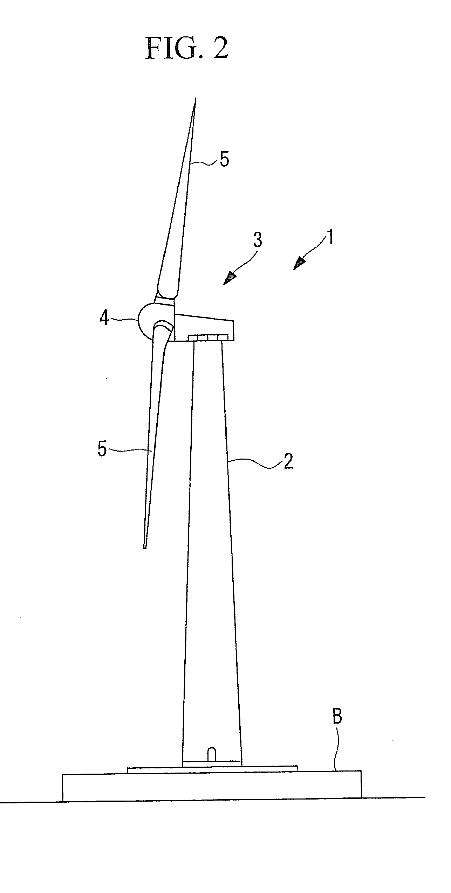

In the following, an embodiment according to the present invention will be described with reference to the drawings.
A wind turbine generator 1 shown in Fig. 2 includes a tower 2 erected on a foundation B, a nacelle 3 installed on an upper end of the tower 2, and a rotor hub 4 installed on a front end side of the nacelle 3 so as to be supported rotatably about a substantially horizontal axis. The wind turbine generator 1 can be applied either as an off-shore or on-shore wind turbine generator.

A plurality of (e.g., three) wind turbine blades 5 are attached to the rotor hub 4 radially around the axis thereof. A force of wind hitting the wind turbine blades 5 from an axial direction of the rotor hub 4 is thereby converted to power for rotating the rotor hub 4 about the axis. The rotor hub 4 accommodates equipment such as a pitch control system 32. The rotor hub 4 is normally hermetically sealed.

For example, as shown in Fig.1, a hydraulic pump 14 coupled to the rotor hub 4 via a main shaft 9, a hydraulic motor (not shown) coupled to the hydraulic pump 14 to rotate by high-pressure oil obtained by the hydraulic pump 14, and a synchronously driven generator (not shown) driven by a rotating force of the hydraulic motor are installed in the nacelle 3. The hydraulic pump 14 is, for example, a radial piston pump having a pump shaft 15. The hydraulic pump 14, the hydraulic motor, and the synchronously driven generator constitute a hydraulic drive train. The hydraulic drive train transmits the rotation of the rotor hub 4 to the hydraulic pump 14 coupled thereto via the main shaft 9, and thereby increases a rotation speed of the rotor hub 4 on an output shaft side of the hydraulic motor (hydraulic transmission). The synchronously driven generator is driven at a rotation speed on the output shaft side by increasing the rotation speed of the rotor hub 4 via the hydraulic motor. The synchronously driven generator thereby generates electric power.

Although the wind turbine generator 1 having a transmission function by the hydraulic drive train is described in the present embodiment, the present invention is not limited thereto. For example, a gear box (a transmission) coupled to the rotor hub 4 via the main shaft 9, and a generator coupled to an output shaft of the gear box may be installedin the nacelle 3. The gear box normally has0 a multi-stage gear change mechanism. A rotation speed of the main shaft 9 is increased in multiple stages to a final rotation speed on the output shaft side.

Next, a rotor hub cooling system according to the present embodiment will be described.
The rotor hub cooling system includes a refrigerant circuit 20, a pump 22 connected to the refrigerant circuit 20, and first and second heat exchangers 24 and 28 as shown in Fig. 1. Examples which circulate through the refrigerant circuit 20 as refrigerant include water and oil.

When a temperature inside the rotor hub 4 is higher than that of outside air, the rotor hub cooling system actuates the pump 22 to cool the inside of the rotor hub 4. The rotor hub cooling system is provided with temperature sensors that measure the temperatures about the outside air and the rotor hub 4, and a control unit that controls start-stop operation of the pump 22 and an electric fan 26 based on a measurement result of the temperature sensors. When the temperature of the outside air about the rotor hub 4 is 35°C and when the temperature of the air inside the rotor hub 4 is 50°C, the rotor hub cooling system can be operated to cool the inside of the rotor hub 4.

The refrigerant circuit 20 is a circulation circuit through which the refrigerant is circulated, and configured with pipe members. The refrigerant circuit 20 is installed in both the rotor hub 4 and the nacelle 3 by passing through an inner portion of the main shaft 9 and a center portion of the pump shaft 15 of the hydraulic pump 14. That is, the refrigerant circuit 20 is arranged so as to pass through a coupling portion between the rotor hub 4 and the nacelle 3. A flexible tube 27 that absorbs vibration transmission, displacement, or the like between the equipment and the pipe with high rigidity, and a strainer 29 that filters a solid within the refrigerant are installed in the refrigerant pipe 20. The strainer 29 is installed, for example, downstream of the pump 22.

The refrigerant circuit 20 is divided into a rotary-side pipe portion that rotates about the axis of the rotor hub 4 together with the rotor hub 4, and a stationary-side pipe portion that remains stationary with respect to the rotor hub 4 rotating about the axis. The rotary-side pipe portion and the stationary-side pipe portion are connected together via a rotary joint 16. The rotary joint 16 includes a rotary-side joint and a stationary-side joint. The rotary-side joint is connected to the rotary-side pipe portion of the refrigerant circuit 20, and the stationary-side joint is connected to the stationary-side pipe portion of the refrigerant circuit 20. The rotary-side pipe portion passes through the coupling portion between the rotor hub 4 and the nacelle 3, and is partially arranged inside the rotor hub 4 and fixed to the rotor hub 4. The stationary-side pipe portion is fixed to the nacelle 3 inside the nacelle 3. Accordingly, the pipes of the refrigerant circuit 20 can be installed between the rotor hub 4 as a rotary body, and the nacelle 3 that remains stationary with respect to the rotor hub 4 rotating about the axis. The refrigerant can be thereby transferred from the nacelle 3 to the rotor hub 4, or from the rotor hub 4 to the nacelle 3.

The pump 22 pumps the sucked refrigerant to circulate the refrigerant with a force in the refrigerant circuit 20. The refrigerant pumped from the pump 22 flows sequentially through the first heat exchanger 24 and the second heat exchanger 28, and then returns to the pump 22.

The first heat exchanger 24 is installed in the rotor hub 4, and includes a heat exchanger body 25, and the electric fan 26. The refrigerant flows through an inner portion of the heat exchanger body 25 to exchange heat with air inside the rotor hub 4. The electric fan 26 circulates the air inside the rotor hub 4 to feed the air inside the rotor hub 4 to the heat exchanger body 25. The air passing through the heat exchanger body 25 is thereby cooled down. The electric fan 26 may not be installed according to a design situation if heat exchange required in the rotor hub 4 is performed without the electric fan 26. The first heat exchanger 24 is fixed in the rotor hub 4, and rotates about the axis of the rotor hub 4 together with the rotor hub 4 and the rotary-side pipe portion of the refrigerant circuit 20. A power cable (not shown) that supplies electric power to the electric fan 26 also passes through the inner portion of the main shaft 9 to be wired from the nacelle 3 to the rotor hub 4.

The second heat exchanger 28 is installed, for example, outside of the nacelle 3. When the refrigerant flows through an inner portion of the second heat exchanger 28, the second heat exchanger 28 performs an heat exchange between the refrigerant after the heat exchange at the first heat exchanger 24 and outside air. In the example shown in Fig. 1, the second heat exchanger 28 and the pipe of the refrigerant circuit 20 are arranged in a cover 30 installed outside of the nacelle 3. The cover 30 protects the second heat exchanger 28 and the pipe of the refrigerant circuit 20 from external stuff. An opening portion, through which outside air passes, is formed in the cover 30 such that the second heat exchanger 28 comes into contact with the outside air inside the cover 30. When the outside air passes through the second heat exchanger 28, the second heat exchanger 28 discharges the heat of the refrigerant after the heat exchange at the first heat exchanger 24 to the outside air about the rotor hub 4, the outside air has a lower temperature than that inside the rotor hub 4. As a result, the refrigerant is cooled down by the second heat exchanger 28, and the cooled refrigerant returns to the pump 22.

In the present embodiment, as shown in Fig. 1, a thermometer T1 that measures the temperature inside the rotor hub 4, a thermometer T2 that measures the outside air temperature, and a control unit 34 that receives measurement values of the respective thermometers T1 and T2 and is connected to the pump 22 via a control signal line may be also provided. The control unit 34 is, for example, a computer. When determining that the air temperature inside the rotor hub 4 is higher than the outside air temperature or a predetermined temperature which can be determined based on the outside air temperature (e.g., a temperature higher by a predetermined value than the outside air temperature; the same applies below), the control unit 34 starts the operation of the pump 22 to start the circulation of the refrigerant. When determining that the air temperature inside the rotor hub 4 is equal to or lower than the outside air temperature or the predetermined temperature which can be determined based on the outside air temperature, the control unit 34 may stop the operation of the pump 22 to stop the circulation of the refrigerant.

Although the example in which the second heat exchanger 28 is installed outside the nacelle 3 to perform the heat exchange between the refrigerant and the outside air has been described in the present embodiment, the present invention is not limited thereto. For example, in a case of an off-shore wind turbine generator, the second heat exchanger 28 may be installed undersea to cool the refrigerant by using seawater.

A heat exchanger (a third heat exchanger) may be also provided in the hydraulic pump 14, the generator, or the gear box installed within the nacelle 3, and the refrigerant circuit 20 may be connected to the heat exchanger provided in the devices. The heat exchanger is provided at a downstream portion relative to the first heat exchanger 24 in the refrigerant circuit 20. With this configuration, the refrigerant circulated through the refrigerant circuit 20 flows through the heat exchangers to discharge the heat of the hydraulic pump 14, the generator, or the gear box together with the heat inside the rotor hub 4 to the outside. In this case, the refrigerant in the refrigerant circuit 20 is preferably always circulated regardless of the temperature of the rotor hub 4 so as to cool the devices.

Next, the operation of the rotor hub cooling system will be described.
The temperature inside the rotor hub 4 tends to be increased by being heated with the equipment, such as the pitch control system 32 and a battery, installed in the rotor hub 4. When the air temperature inside the rotor hub 4 is higher than the outside air temperature or the predetermined temperature which can be determined based on the outside air temperature, the operations of the pump 22 and the electric fan 26 are initiated.

When the pump 22 pumps out the refrigerant in the refrigerant circuit 20, the refrigerant is transferred to the first heat exchanger 24 in the rotor hub 4 by the pressure of the pumping. The electric fan 26 circulates the air inside the rotor hub 4 to feed the air to the heat exchanger body 25. The air passing through the heat exchanger body 25 is thereby cooled down to suppress an increase in temperature inside the rotor hub 4. The refrigerant flowing through the inner portion of the heat exchanger body 25 is heated by the air inside the rotor hub 4, and transferred to the second heat exchanger 28.

The second heat exchanger 28 is in contact with the air outside the nacelle 3 and the rotor hub 4 (the outside air). The refrigerant flowing through the second heat exchanger 28 is cooled down by the outside air. The cooled refrigerant returns to the pump 22. When the air temperature inside the rotor hub 4 is equal to or lower than the outside air temperature or the predetermined temperature which can be determined based on the outside air temperature, the operation of the pump 22 is suspended to stop the circulation of the refrigerant.

As described above, the refrigerant circulated through the refrigerant circuit 20 discharges the heat obtained by the heat exchange at the first heat exchanger 24 installed in the rotor hub 4 to the outside of the rotor hub 4 via the second heat exchanger 28. As a result, the inner portion of the rotor hub 4 can be cooled down in a hermetically-sealed state, so that it is not necessary to provide an opening portion in the rotor hub 4 and thereby ventilate with a force the rotor hub 4 in the present embodiment. The outside air also does not flow into the rotor hub 4, so that the rotor hub 4 can be shielded from the outside air. Thus, no measure against damage by brine wind is required on an inner wall of the rotor hub 4 or the equipment installed in the rotor hub 4.

The temperature inside the rotor hub 4 can be relatively lowered as compared to a state in which the rotor hub 4 is hermetically sealed and not aggressively cooled down. Therefore, the reliability of the equipment installed in the rotor hub 4, and particularly, reliability of the electrical equipment can be improved, and a lifespan thereof can be extended. Measures against damage by brine wind on the equipment can be reduced as compared to a case in which the heat-generating equipment installed in the rotor hub 4 is installed outside of the rotor hub 4. Moreover, when it is compared to a case in which an air-conditioning system is installed in the wind turbine generator 1, since equipment such as a compressor, an expansion valve, and a drain pipe for dew condensation water is not required, it costs less and takes less time to install and maintain the wind turbine generator 1.

**{Reference Signs List}**

| | |
|---|---|
| 1 | Wind turbine generator |
| 2 | Tower |
| 3 | Nacelle |
| 4 | Rotor hub |
| 5 | Wind turbine blade |
| 9 | Main shaft |
| 14 | Hydraulic pump |
| 15 | Pump shaft |
| 16 | Rotary joint |
| 20 | Refrigerant circuit |
| 22 | Pump |
| 24 | First heat exchanger |
| 25 | Heat exchanger body |
| 26 | Electric fan |
| 28 | Second heat exchanger |
| 30 | Cover |
| 32 | Pitch control system |
| 34 | Control unit |
| T1 | Thermometer (first temperature measurement unit) |
| T2 | Thermometer (second temperature measurement unit) |

## Claims

1. A wind turbine generator (1) comprising a rotor hub (4) to which a wind turbine blade (5) is attached, and a nacelle (3) to which the rotor hub (4) is rotatably connected, and which accommodates a generating mechanism for generating electric power based on a rotational driving force from the wind turbine blade (5), the wind turbine generator being **characterized by** further comprising:
a pump (22) for pumping a refrigerant;
a first heat exchanger (24) provided inside the rotor hub (4), for performing a heat exchange between the refrigerant and air inside the rotor hub (4);
a second heat exchanger (28) for performing a heat exchange between the refrigerant after the heat exchange at the first heat exchanger (24) and air or water outside the rotor hub (4); and
a refrigerant circuit (20) connecting the pump (22), the first heat exchanger (24), and the second heat exchanger (28), for circulating the refrigerant through the connected elements.

2. The wind turbine generator (1) according to claim 1, wherein the refrigerant circuit (20) is arranged so as to pass through a coupling portion between the rotor hub (4) and the nacelle (3), and
a pipe of the refrigerant circuit (20) passing through the coupling portion and fixed to the rotor hub (4) is connected to a pipe of the refrigerant circuit (20) fixed to the nacelle (3) via a rotary joint (16).

3. The wind turbine generator (1) according to claim 1 or 2,
wherein the refrigerant circuit (20) is further connected at a downstream side thereof relative to the first heat exchanger (24) to a third heat exchanger provided in a transmission or a generator installed inside the nacelle (3), and
the second heat exchanger (28) performs the heat exchange to discharge heat of the refrigerant after the heat exchange at the first heat exchanger (24) and heat exchange at the third heat exchanger to the outside of the rotor hub (4).

4. The wind turbine generator (1) according to any one of claims 1 to 3, further comprising:
a first temperature measuring unit (T1) that measures a temperature inside the rotor hub (4);
a second temperature measuring unit (T2) that measures a temperature outside the nacelle (3); and
a control unit (34) that controls a start-stop operation of the pump (22) based on the temperatures measured by the first temperature measuring unit (T1) and the second temperature measuring unit (T2).

5. A method for cooling a rotor hub (4) of a wind turbine generator (1), wherein the wind turbine generator (1) comprises the rotor hub (4) to which a wind turbine blade (5) is attached, a nacelle (3) to which the rotor hub (4) is rotatably connected and which accommodates a generating mechanism for generating electric power based on a rotational driving force from the wind turbine blade (5), a refrigerant circuit (20) connecting a pump, a first heat exchanger (24), and a second heat exchanger (28), for circulating a refrigerant through the connected elements, a first temperature measuring unit (T1) that measures a temperature inside the rotor hub (4), and a second temperature measuring unit (T2) that measures a temperature outside the nacelle (3), the method comprising the steps of:
starting an operation of pumping the refrigerant based on the temperatures measured by the first temperature measuring unit (T1) and the second temperature measuring unit (T2);
performing a heat exchange between the refrigerant and air inside the rotor hub (4) by the first heat exchanger (24) provided in the rotor hub (4);
performing a heat exchange between the refrigerant after the heat exchange at the first heat exchanger (24) and air or water outside the rotor hub (4) by the second heat exchanger (28); and
stopping the operation of pumping the refrigerant based on the temperatures measured by the first temperature measuring unit (T1) and the second temperature measuring unit (T2) .
